# EUROPEAN PATENT APPLICATION

(11) **EP 4 819 562 A1**
(43) Date of publication of application: **07.10.2026**
(21) Application number: 24896132.8
(22) Date of filing: 29.10.2024
(51) Int. Cl.: H04L 41/14

(54) **LINK SIMULATION METHODS, ELECTRONIC DEVICE AND STORAGE MEDIUM**

(30) Priority: 30.11.2023 CN 202311636284
(71) Applicant: ZTE CORPORATION, Shenzhen, Guangdong 518057 (CN)
(72) Inventor: HUANG, Zhuoyao, Shenzhen, Guangdong 518057 (CN)
(74) Representative: Canzler & Bergmeier Patentanwälte Partnerschaft mbB
(86) International application number: PCT/CN2024/128062
(87) International publication number: WO 2025/113041

(57) **Abstract**

Digital twin network-based link simulation methods, an electronic device, and a storage medium. A method is applied to a first network element and comprises: in response to a change in a link connected to the first network element, generating a first incremental message on the basis of the change in the link; and sending the first incremental message to a neighbor network element of the first network element.

## Description

### CROSS-REFERENCE TO RELATED APPLICATIONS

This application claims priority from Chinese patent application No. 202311636284.9 filed on November 30, 2023, the entirety of which is hereby incorporated by reference.

### TECHNICAL FIELD

The present application relates to the field of communications, and in particular, relates to a digital twin network-based link simulation method, an electronic device, and a computer-readable storage medium.

### BACKGROUND

A digital twin network is a digital model based on a physical entity, interacts with an actual physical entity in real time through sensors and data connections, and provides real-time feedback and predictive capabilities. An objective of the digital twin network is to accurately simulate and reflect states and behaviors of the physical entity in a virtual environment, so as to perform tasks such as analysis, monitoring, optimization, and decision-making.

How to use a digital twin network to efficiently simulate link changes generated in a physical network has become an urgent problem to be solved in the art.

### SUMMARY

An embodiment of the present application provides a link simulation method based on a digital twin network, which is applied to a first network element and includes: in response to a change in a link connected to the first network element, generating a first incremental message based on the change in the link; and sending the first incremental message to a neighbor network element of the first network element.

An embodiment of the present application provides a link simulation method based on a digital twin network, which is applied to a second network element and includes: receiving an incremental message sent from a neighbor network element of the second network element, the incremental message including information of deleting a route or information of adding a route; determining, based on the received incremental message, whether to update a routing table of the second network element; in response to determining to update the routing table of the second network element, updating the routing table of the second network element based on the incremental message and generating a second incremental message, and sending the second incremental message to any neighbor network element of the second network element.

An embodiment of the present application provides a link simulation method based on a digital twin network, the digital twin network including a digital twin simulation unit and a digital twin control unit, the method includes: simulating, by the digital twin simulation unit, a change in a link in the digital twin network; and in response to the change in the link, updating, by the digital twin control unit, routes of respective network elements in the digital twin network.

An embodiment of the present application provides an electronic device, including: at least one processor; and a storage device having stored at least one computer program or instruction, the at least one processor executes the at least one computer program or instruction to implement the link simulation method based on the digital twin network in the present application.

An embodiment of the present application provides a non-volatile computer-readable storage medium having stored thereon a computer program or instruction which, when executed by a processor, causes the processor to implement the link simulation method based on the digital twin network in the present application.

### BRIEF DESCRIPTION OF DRAWINGS

FIG. 1 is a schematic structural diagram of a link simulation system based on a digital twin network according to an embodiment of the present application.
FIG. 2 is a flowchart of a link simulation method based on a digital twin network according to an embodiment of the present application.
FIG. 3 is a flowchart of a link simulation method based on a digital twin network according to an embodiment of the present application.
FIG. 4 is a flowchart of a link simulation method based on a digital twin network according to an embodiment of the present application.
FIG. 5 is a flowchart of a link simulation method based on a digital twin network according to an embodiment of the present application.
FIG. 6 is a flowchart of a link simulation method based on a digital twin network according to an embodiment of the present application.
FIG. 7 is a flowchart of generating information of deleting a route in response to simulating a link with a fault according to an embodiment of the present application.
FIG. 8 is a schematic diagram showing a process of generating information of deleting a route in response to simulating a link with a fault according to an embodiment of the present application.
FIG. 9 is a flowchart of triggering to calculate a route in response to simulating a link with a fault according to an embodiment of the present application;
FIG. 10 is a schematic diagram showing a process of triggering to calculate a route in response to simulating a link with a fault according to an embodiment of the present application.
FIG. 11 is a flowchart of triggering to calculate a route, in response to simulating a link being newly added after simulating a link with a fault, according to an embodiment of the present application.
FIG. 12 is a schematic diagram showing a process of triggering to calculate a route, in response to simulating a link being newly added after simulating a link with a fault, according to an embodiment of the present application.
FIG. 13 is a flowchart of triggering to calculate a route in response to simulating a link being newly added according to an embodiment of the present application.
FIG. 14 is a schematic diagram showing a process of triggering to calculate a route in response to simulating a link being newly added according to an embodiment of the present application.
FIG. 15 is a schematic structural diagram of an electronic device according to an embodiment of the present application.
FIG. 16 is a schematic diagram of a non-volatile computer-readable medium according to an embodiment of the present application.

### DETAILED DESCRIPTION OF EMBODIMENTS

To make those skilled in the art better understand the technical solutions of the present application, the digital twin network-based link simulation method, the electronic device, and the computer-readable storage medium of the present application will be described in detail below with reference to the accompanying drawings.

Exemplary embodiments will be described more sufficiently below with reference to the accompanying drawings, but may be embodied in different forms and should not be construed as limited to the embodiments set forth herein. These embodiments are provided so that the present application will be more thorough and complete, and will fully convey the scope of the present application to those skilled in the art.

As used herein, the term "and/or" includes any and all combinations of one or more of the associated listed items.

The terminology used herein is for the purpose of describing particular embodiments only and is not intended to limit the present application. As used herein, the singular forms "a", "an" and "the" are intended to include the plural forms as well, unless the context clearly indicates otherwise. It will be further understood that as used herein, the terms "comprise/include" and/or "consist of ..." specify the presence of the stated features, integers, steps, operations, elements, and/or components, but do not preclude the presence or addition of one or more other features, integers, steps, operations, elements, components, and/or groups thereof.

Embodiments described herein may be described with reference to plan and/or sectional views in idealized representations of the present application. Accordingly, the example illustrations may be modified in accordance with the manufacturing process and/or the tolerance. Therefore, the embodiments are not limited to the embodiments shown in the drawings, but further include modifications of configurations formed based on a manufacturing process. Therefore, the regions illustrated in the figures have schematic properties, and the shapes of the regions shown in the figures illustrate particular shapes of regions of elements, but are not intended to be limiting.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present application, and will not be interpreted in an idealized or overly formal sense unless expressly so defined herein.

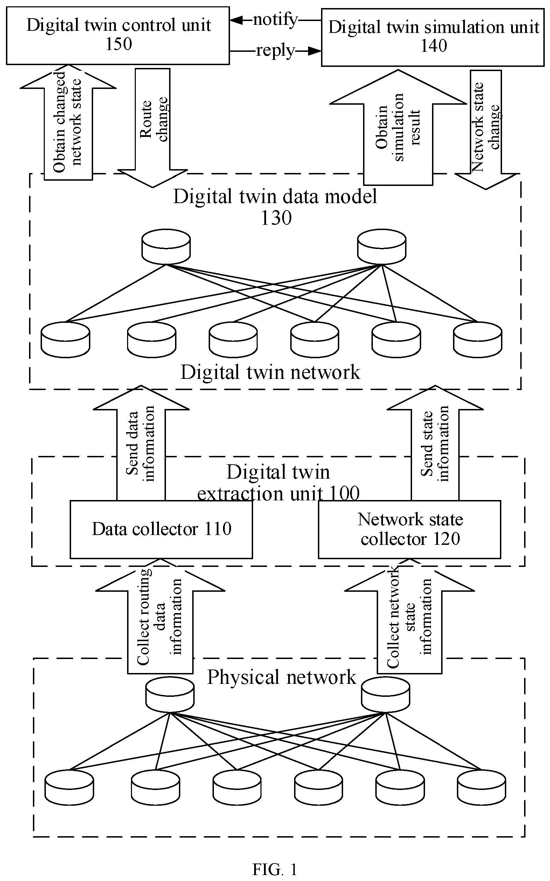

An embodiment of the present application discloses a link simulation system based on a digital twin network. Referring to FIG. 1, the present application transforms a physical network space into a digital twin space, and constructs a digital twin network based on a forwarding plane in an IP (Internet Protocol) network. The digital twin network establishes an abstract data model for network elements, interfaces, links, protocol configurations, virtual routing forwarding (VRF), routing tables, and routes of the physical network, and acquires data to instantiate the data model, thereby ensuring that the data in the digital twin network fully reflects a state of a real physical network.

A network management control system (NMS) is a system for monitoring, managing, and controlling a computer network, and provides functions of real-time monitoring, configuring, and maintaining network devices, resources, and services, to ensure efficiency, reliability, and security of the network.

The telemetry technology refers to a process of collecting, monitoring, and transmitting key data and metrics through sensors, devices, or systems. Such data may be used for real-time monitoring, analysis, troubleshooting, performance optimization, and predictive maintenance. The telemetry technology plays a key role in telecommunication network management, device monitoring, performance optimization, and the like, and helps operators and enterprises to maintain stability and efficiency of a network.

A BGP (border gateway protocol) monitoring protocol (BMP) is a protocol for monitoring and collecting a BGP. The BGP is one of main protocols for selecting routing on the internet, and is used for exchanging route information between different autonomous systems. The BMP aims to provide a standardized method allowing a network administrator to monitor a BGP routing table and a change in a route, to enable the network administrator to better understand the state of the network, troubleshoot a problem, and optimize performance.

Since the digital twin network synchronizes topology information of all network elements in the physical network, i.e., establishes a virtual network with complete route data, by dynamically simulating a network state of the digital twin network, for example, by simulating a link with a fault or a newly added link, a synchronization of a route can be simply implemented by the network element in the network forwarding incremental route information in a change, without constructing a routing table from scratch, thereby greatly reducing computational data volume and improving accuracy and efficiency of calculating.

In addition, by optimizing routing configuration of the digital twin network, an optimal network optimization model can be obtained, which can predict a change of a route caused by a routing protocol operating in the network, under constraints of limited resources and computation time, before a configuration of the physical network or a resource of the network (whether due to a fault or planning) changing, thereby optimizing and improving the capability of the communication network for supporting services.

Referring to FIG. 1, a link simulation system based on a digital twin network includes a digital twin extraction unit 100, a digital twin data model 130, a digital twin simulation unit 140, and a digital twin control unit 150.

In some implementations, the digital twin extraction unit 100 is configured to collect all data information for constructing the digital twin network data model 130 from a physical network device via a data collector 110 and a network state collector 120. The data collector 110 may obtain route data information in response to the physical network device actively reporting. The data collector 110 may obtain VRF, routing tables, route information and the like by means of telemetry, BMP or the like (e.g., collect interior gateway protocol (IGP) routes via telemetry, and collect BGP routes via BMP) from the physical network device. The network state collector 120 may obtain resource information, such as state information of network elements, interfaces, links, and the like, in the physical network via NMS, by means of initial fully synchronizing and incremental changing, with the incremental changing being notified via an initiative message. It can be seen that the data collector 110 and the network state collector 120 obtain complete topology information of all network elements in the physical network in a complementary manner.

The digital twin data model 130 is constructed based on data obtained by the digital twin extraction unit 100, and the digital twin data model 130 is a data representation model that abstractly models various entities in the physical network to store and represent states of the network.

The digital twin simulation unit 140 is configured to simulate to change the network state within the digital twin data model 130, for example, simulate to add or delete a network element, a link or an interface, set a fault, change a protocol configuration, and the like.

The digital twin control unit 150 is configured to model a control plane of the digital twin data model 130, and can simulate a change of a route in response to the digital twin simulation unit 140 simulating a change of the network state.

By means of a centralized computation, the digital twin network synchronizes complete topology information of all network elements in the physical network, constructs a model of a control plane of the network, and simulates how a route changes in the digital twin network in response to a change in any network element, interface, link, and/or protocol configuration.

Since the digital twin network synchronizes topology information of all network elements in the physical network, i.e., establishes a virtual network with complete route data, by dynamically simulating a network state of the digital twin network, for example, by simulating a link with a fault or a link being newly added, a synchronization of a route can be simply implemented by the network element in the network forwarding incremental route information with the change, without constructing a routing table from scratch, thereby greatly reducing computational data volume and improving the accuracy and efficiency of calculating.

An embodiment of the present application provides a link simulation method based on a digital twin network, which is applied to a first network element and includes: in response to a change in a link connected to the first network element, generating a first incremental message based on the change in the link, and sending the first incremental message to a neighbor network element of the first network element.

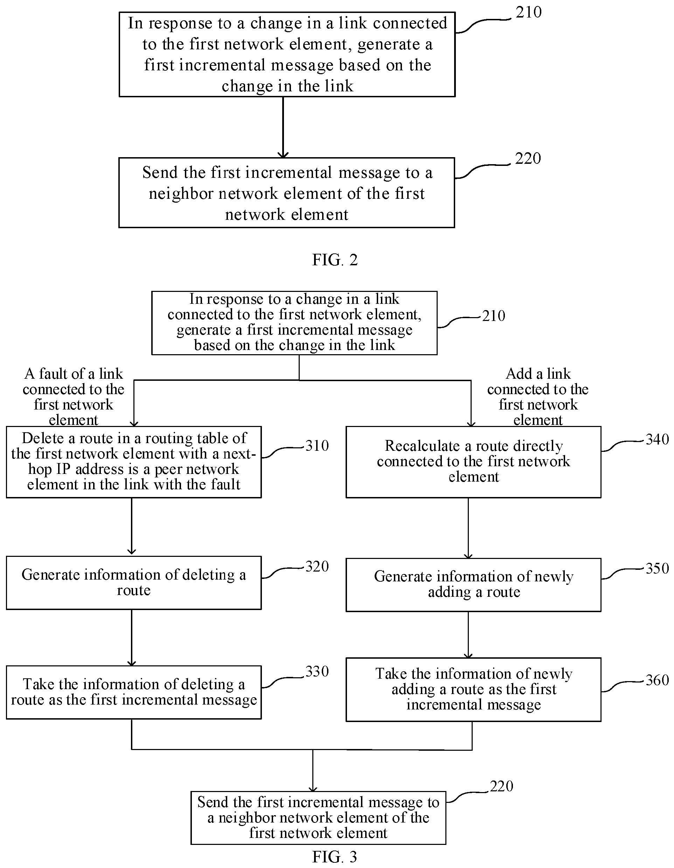

FIG. 2 is a flowchart of a link simulation method based on a digital twin network according to an embodiment of the present application. Referring to FIG. 2, the link simulation method includes following operations 210 to 220.

At operation 210, in response to a change in a link connected to the first network element, generating a first incremental message based on the change in the link.

Since the present application provides a link simulation method based on a digital twin network, the change in the link herein refers to simulating (or emulating) the link in the digital twin network to change a network state of the link. The digital twin network is the digital twin data model 130 generated by the link simulation system described above. It may also be interpreted as that the change in the link means that the digital twin simulation unit 140 changes a network state in the digital twin data model 130.

At operation 220, sending the first incremental message to a neighbor network element of the first network element.

In some implementations, the first incremental message is information of a route changed in a routing table of the network element (i.e., the first network element) which is at any of two ends of the link with the change, and is generated in response to the change in the link. The neighbor network element of the first network element may include a network element directly connected to the first network element.

In some implementations, the change in the link includes at least one of: changing a metric value of the link connected to the first network element to simulate a fault of the link, or adding a link connected to the first network element, or the like.

FIG. 3 is a flowchart of a link simulation method based on a digital twin network according to an embodiment of the present application. Referring to FIG. 3, if the change in the link includes changing a metric value of the link connected to the first network element to simulate a fault of the link, generating the first incremental message based on the change in the link (i.e., operation 210) includes following operations 310 to 330.

At operation 310, in response to a fault of a link connected to the first network element, deleting a route in a routing table of the first network element, with a next -hop IP address of the route being a peer network element at the other end of the link, e.g., the first network element and the peer network element being at opposite ends of the link.

In some implementations, due to the fault of the link, the network elements respectively at two ends of the link cannot be connected with each other, and thus the route in the routing table of the network element at any of the two ends of the link, with the next-hop IP address of the route being the peer network element at the other end of the link, is to be deleted.

At operation 320, generating information of deleting a route, with the information of deleting a route including information of the deleted route.

In some implementations, the deleted route is a route in a routing table of the first network element with the next-hop IP address of the route being the peer network element at the other end of the link in the fault.

At operation 330, taking the information of deleting a route as the first incremental message.

In some implementations, generating the first incremental message based on the change in the link further includes: storing a destination IP address of the deleted route to a set of destination IP addresses of the digital twin network.

The set of destination IP addresses is generated based on the information of deleting a route, and the purpose of providing the set of destination IP addresses is to address the problem that the network elements at the two ends of the link in the fault cannot be reached due to the route being deleted in response to the fault of the link. The usage scenarios of the set of destination IP addresses will be described in detail later.

In some implementations, changing the metric value of the link connected to the first network element to simulate the fault of the link includes at least one of: increasing the metric value of the link or deleting the link.

With continued reference to FIG. 3, if the change in the link includes at least one of adding a link connected to the first network element, or decreasing a metric value of the link connected to the first network element, then generating the first incremental message based on the change in the link (i.e., operation 210) includes following operations 340 to 360.

At operation 340, in response to adding a link connected to the first network element, recalculating a route directly connected to the first network element.

In some implementations, in response to adding a link, the network element (i.e., the first network element) at any of two ends of the added link recalculates the route directly connected to the network element. The route directly connected to the first network element may include a route of a network element directly connected to the first network element. The change in the link includes, but is not limited to, any one of: a change in a routing protocol, a change in a link metric value, or the like.

At operation 350, generating information of adding a route, the information of adding a route includes information of the recalculated route and information of a route stored in a routing table of the first network element.

In some implementations, the information of adding a route includes information of the recalculated route of the network element directly connected to the first network element, and information of the route already present in the routing table of the first network element.

At operation 360, taking the information of adding a route as the first incremental message.

In some implementations, to ensure that the neighbor network element of the first network element can identify whether the first incremental message is information of deleting a route or information of adding a route after the neighbor network element receiving the first incremental message, the first incremental message carries information relating to an incremental type, and the incremental type includes one of a type indicating deleting a route or a type indicating adding a route.

In some implementations, if the incremental type is the type indicating deleting a route, the neighbor network element of the first network element can determine that the first incremental message is information of deleting a route; and if the incremental type is the type indicating adding a route, the neighbor network element of the first network element can determine that the first incremental message is information of adding a route.

An embodiment of the present application provides a link simulation method based on a digital twin network, which is applied to a second network element and includes: receiving an incremental message sent from a neighbor network element of the second network element, the incremental message including information of deleting a route or information of adding a route; determining, based on the received incremental message, whether to update a routing table of the second network element; in response to determining to update the routing table of the second network element, updating the routing table of the second network element based on the incremental message and generating a second incremental message, and sending the second incremental message to any neighbor network element of the second network element.

It should be appreciated that in the embodiment of the present application, the first network element is defined as the network element at any of two ends of the link with a change, and the second network element is defined as a network element that receives an incremental message. The incremental message may include a first incremental message and a second incremental message. After the first network element generates the first incremental message, the first incremental message is sent to a neighbor network element of the first network element, the neighbor network element receiving the first incremental message may be the second network element. In addition, if the second network element, after receiving the incremental message, updates the routing table and generates a second incremental message, and sends the second incremental message to any neighbor network element of the second network element, then the neighbor network element of the second network element includes the network element that previously sent the first incremental message, that is, the network element that previously sent the first incremental message is also regarded as a second network element upon receiving the second incremental message.

It should be further appreciated that in the embodiment of the present application, the first incremental message is an incremental message generated by the first network element in response to a change in a link; and the second incremental message is an incremental message generated by the second network element by updating the routing table in response to receiving an incremental message. A detailed description of the first incremental message and the second incremental message will be given later through specific examples.

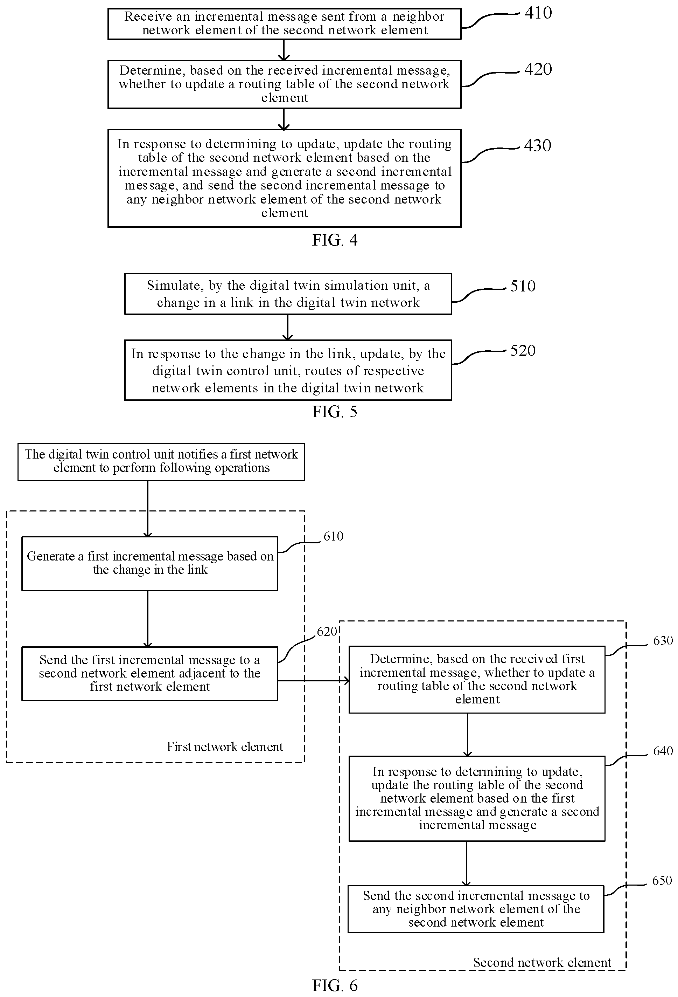

FIG. 4 is a flowchart of a link simulation method based on a digital twin network according to an embodiment of the present application. Referring to FIG. 4, the link simulation method includes following operations 410 to 430.

At operation 410, receiving an incremental message sent from a neighbor network element of the second network element, the incremental message including information of deleting a route or information of adding a route.

At operation 420, determining, based on the received incremental message, whether to update a routing table of the second network element.

At operation 430, in response to determining to update the routing table of the second network element, updating the routing table of the second network element based on the incremental message and generating a second incremental message, and sending the second incremental message to any neighbor network element of the second network element.

In some implementations, in response to determining not to update the routing table of the second network element, the routing table of the second network element is not to be updated, and no second incremental message is generated.

In some implementations, to ensure that the second network element can identify whether the incremental message is information of deleting a route or information of adding a route after the second network element receiving the incremental message, the incremental message carries information relating to an incremental type, and the incremental type includes one of a type indicating deleting a route or a type indicating adding a route.

In some implementations, if the incremental type is the type indicating deleting a route, the second network element can determine that the incremental message is information of deleting a route; and if the incremental type is the type indicating adding a route, the second network element can determine that the incremental message is information of adding a route.

In some implementations, in response to the incremental type being the type indicating deleting a route, it is determined that the incremental message includes information of deleting a route.

In some implementations, if the incremental type is the type indicating deleting a route, determining, based on the received incremental message, whether to update the routing table of the second network element (i.e., operation 420) includes following operations 421 to 422.

At operation 421, determining whether at least one first target route is present in the routing table of the second network element, with a destination IP address of the at least one first target route being the same as a destination IP address of a deleted route included in the incremental message, and a next-hop IP address of the at least one first target route being an IP address of a network element sending the incremental message.

At operation 422, in response to the presence of at least one first target route, determining to update the routing table of the second network element.

In some implementations, if the incremental type is the type indicating deleting a route, in response to determining to update the routing table of the second network element, updating the routing table of the second network element based on the incremental message and generating the second incremental message (i.e., operation 430) includes following operations 431 to 432.

At operation 431, deleting the at least one first target route from the routing table of the second network element, the at least one first target route including one or more first target routes.

At operation 432, taking information of the at least one first target route deleted as the second incremental message, with the incremental type of the second incremental message being the type indicating deleting a route.

In some implementations, if the incremental type is the type indicating adding a route, determining, based on the received incremental message, whether to update the routing table of the second network element (i.e., operation 420) includes following operations 423 to 425.

At operation 423, recalculating, based on the information of adding a route, routes from the second network element to other respective network elements in the digital twin network.

At operation 424, determining whether a metric value of the recalculated route from the second network element to any another network element in the other respective network elements in the digital twin network is less than a metric value of a route to the another network element in the routing table of the second network element.

At operation 425, in response to the metric value of the recalculated route from the second network element to any another network element in the other network elements in the digital twin network being less than the metric value of the route to the another network element in the routing table of the second network element, determining to update the routing table of the second network element.

In some implementations, if the incremental type is the type indicating adding a route, in response to determining to update the routing table of the second network element, updating the routing table of the second network element based on the incremental message and generating the second incremental message (i.e., operation 430) includes following operation 433.

At operation 433, replacing the corresponding route in the routing table of the second network element with the recalculated route, and generating the second incremental message, the second incremental message including information of the replaced route, and the incremental type of the second incremental message being the type indicating adding a route.

An embodiment of the present application provides a link simulation method based on a digital twin network, the digital twin network including a digital twin simulation unit and a digital twin control unit, the method includes: simulating, by the digital twin simulation unit, a change in a link in the digital twin network; and in response to the change in the link, updating, by the digital twin control unit, routes of respective network elements in the digital twin network.

FIG. 5 is a flowchart of a link simulation method based on a digital twin network according to an embodiment of the present application. The digital twin network includes a digital twin simulation unit and a digital twin control unit. Referring to FIG. 5, the link simulation method includes following operations 510 to 520.

At operation 510, simulating, by the digital twin simulation unit, a change in a link in the digital twin network.

The digital twin simulation unit sets a fault in the digital twin network, for example, by disconnecting a link between two network elements to form a fault link (i.e., the link in a fault). In some implementations, the disconnection of the link between the two network elements can be simulated by increasing the metric value of the link.

At operation 520, in response to the change in the link, updating, by the digital twin control unit, routes of respective network elements in the digital twin network.

Based on the change in the link, the digital twin control unit may update routing tables of respective virtual network elements in the digital twin network to ensure route paths of the fault link to be deleted throughout the network, and route paths of the newly added link to be added throughout the network, which can enable to further determine whether the network elements at two ends of the fault link can be reached through other paths, or whether a communication with the network elements at the two ends of the fault link can be restored through the added link.

FIG. 6 is a flowchart of a link simulation method based on a digital twin network according to an embodiment of the present application. The method includes following operations 610 to 650.

At operation 610, notifying, by the digital twin control unit, a first network element to perform following operations, with the first network element including any of network elements at two ends of the link with a change in the digital twin network: generating a first incremental message based on the change in the link, the first incremental message including information of deleting a route or information of adding a route, the first incremental message further including information relating to an incremental type, and the incremental type includes one of a type indicating deleting a route or a type indicating adding a route.

At operation 620, sending the first incremental message to a second network element adjacent to the first network element.

At operation 630, receiving the first incremental message by the second network element and performing following operations: determining, based on the received first incremental message, whether to update a routing table of the second network element.

At operation 640, in response to determining to update the routing table of the second network element, updating the routing table of the second network element based on the first incremental message and generating a second incremental message.

At operation 650, sending the second incremental message to any neighbor network element of the second network element.

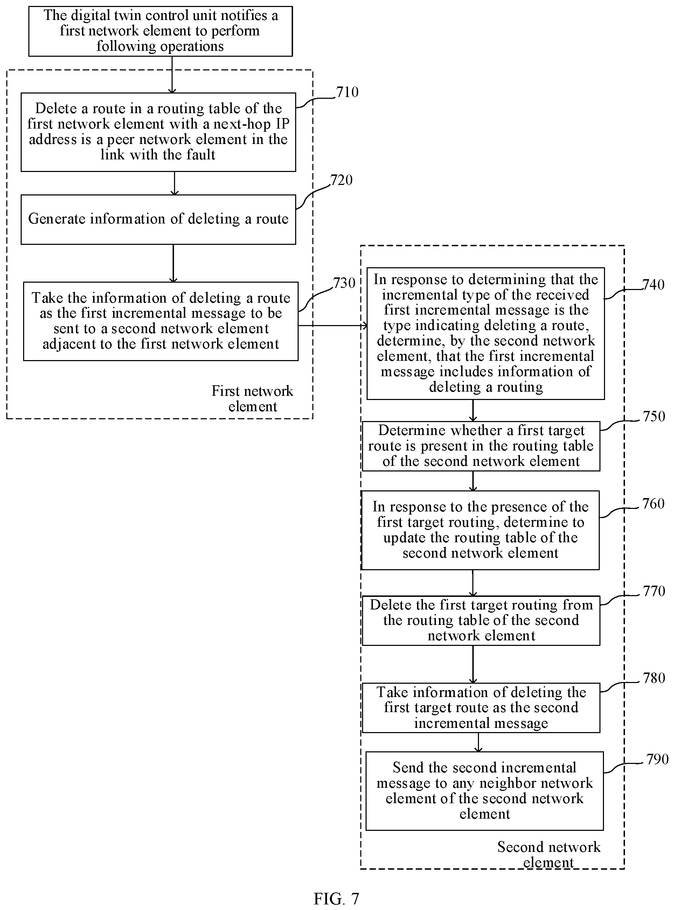

In some implementations, simulating, by the digital twin simulation unit, the change in the link in the digital twin network (operation 510) includes: changing a metric value of the link connected to the first network element to simulate a fault of the link. FIG. 7 is a flowchart of generating information of deleting a route in response to simulating a link with a fault according to an embodiment of the present application. The method further includes following operations 710 to 790.

At operation 710, deleting a route in a routing table of the first network element with a next-hop IP address of the route being a peer network element at the other end of the link in the fault.

In some implementations, due to the fault of the link (i.e., the link being a fault link), the network elements at two ends of the fault link cannot be connected with each other, and routes in the routing tables of the network elements at the two ends of the fault link, with a next-hop IP address of each route being a peer network element at the other end of the fault link, are to be deleted.

At operation 720, generating information of deleting a route, the information of deleting a route including information of the deleted route.

In some implementations, the deleted route is a route in a routing table of the first network element with a next-hop IP address of the route being a peer network element at the other end of the fault link.

At operation 730, taking the information of deleting a route as the first incremental message, the incremental type of the first incremental message being the type indicating deleting a route, storing a destination IP address of the deleted route to a set of destination IP addresses of the digital twin network, and sending the first incremental message to a second network element adjacent to the first network element.

At operation 740, in response to determining that the incremental type of the received first incremental message is the type indicating deleting a route, determining, by the second network element, that the first incremental message includes information of deleting a route.

At operation 750, determining whether at least one first target route is present in the routing table of the second network element, a destination IP address of the at least one first target route being included in a set of destination IP addresses of the digital twin network, and a next-hop IP address of the at least one first target route being an IP address of the at least one first network element.

At operation 760, in response to the presence of at least one first target route, determining to update the routing table of the second network element.

At operation 770, deleting the at least one first target route from the routing table of the second network element, the at least one first target route including one or more first target routes.

At operation 780, taking information of the deleted first target route as the second incremental message, the incremental type of the second incremental message being the type indicating deleting a route.

At operation 790, sending the second incremental message to any neighbor network element of the second network element.

To enable those skilled in the art to better understand the present application, the embodiment of the present application is further explained below by taking practical applications as examples.

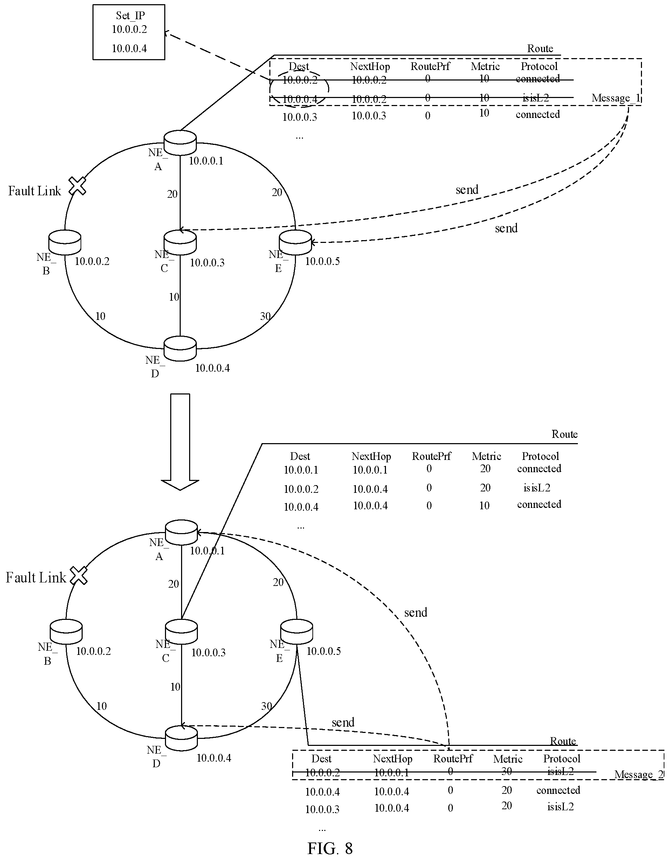

FIG. 8 is a schematic diagram showing a process of generating information of deleting a route in response to simulating a link with a fault according to an embodiment of the present application. In the example shown in FIG. 8, the digital twin network includes five network elements NE_A to NE_E, with IP addresses 10.0.0.1 to 10.0.0.5, respectively. Links are respectively connected between the network element NE_A and the network elements NE_B, NE_C and NE_E, and metric values of these three links are 10, 20 and 20, respectively. Links are respectively connected between the network element NE_D and the network elements NE_B, NE_C and NE_E, and metric values of these three links are 10, 10 and 30, respectively.

At operation 11, simulating a change in a link.

A fault may be set in the digital twin data model 130 by the digital twin simulation unit 140, for example, a link between network elements NE_A and NE_B is set as a fault link. In this example, the link between the network elements NE_A and NE_B is disconnected to form a fault link. In some implementations, the disconnection between the network elements NE_A and NE_B may be simulated by increasing the metric value of the link.

A procedure executed by the digital twin control unit 150 includes following operations 12 to 16.

At operation 12, controlling, based on the change in the link, the first network element to generate a first incremental message Message_1.

In this example, the network element (i.e., the first network element, taking network element NE_A as an example) deletes, from its own routing table, a route with a next-hop IP address of the route being a peer network element (i.e., network element NE_B) at the other end of the fault link; generates information of deleting a route, the information of deleting a route including information of the route with the next-hop IP address being NE_B; and encapsulates information of the deleted route into the first incremental message Message_1. Similarly, the network element NE_B may initiate a process the same as above, which will not be repeated here.

At operation 13, placing all destination IP addresses (10.0.0.2, 10.0.0.4) of all deleted routes into a set of destination IP addresses, i.e., Set_IP.

At operation 14, sending the first incremental message Message_1 to neighbor network elements of the network element NE_A, i.e., network elements NE_C and NE_E.

At operation 15, after receiving the first incremental message Message_1 sent from the network element NE_A, determining, by the network elements NE_C and NE_E based on the information relating to an incremental type carried in the first incremental message Message_1, that the type of the first incremental message Message_1 is the type indicating deleting a route; and then determining whether at least one first target route is present in the routing table based on the received first incremental message Message_1. A destination IP address of the at least one first target route is the same as the destination IP address (10.0.0.2 and 10.0.0.4 respectively) in the first incremental message Message_1, and a next-hop IP address of the at least one first target route is an IP address (10.0.0.1) of the network element (i.e., the network element NE_A) sending the first incremental message Message_1. In the example of FIG. 8, the network element NE_E determines that the first target route is present, and deletes information of that route from the routing table; the routing table of the network element NE_C includes no first target route, and thus is not to be updated.

It should be appreciated that, although the example of FIG. 8 shows one first target route in the routing table of the network element NE_E, the at least one first target route is not limited to one first target route.

At operation 16, after completing the operation of deleting the route, encapsulating, by the network element NE_E, the information of the deleted route into a new incremental message (i.e., a second incremental message Message_2), the information in the second incremental message Message_2 being different from the information in the first incremental message Message_1, and the incremental type of the second incremental message Message_2 being the type indicating deleting a route; and spreading, by the network element NE_E, the second incremental message Message_2 to neighbor network elements (i.e., the network elements NE_A and NE_D) of the network element NE_E.

It should be appreciated that, the network element NE_A receiving the second incremental message Message_2 is regarded as a second network element in the context of the present application. If the network elements NE_A and NE_D determine, based on the second incremental message Message_2, that operations of deleting are desired to be performed on their routing tables, operations 15 and 16 are performed, until the incremental message is no longer spread and all associated routes throughout the network are deleted.

In some implementations, changing the metric value of the link connected to the first network element to simulate the fault of the link includes at least one of: increasing the metric value of the link or deleting the link.

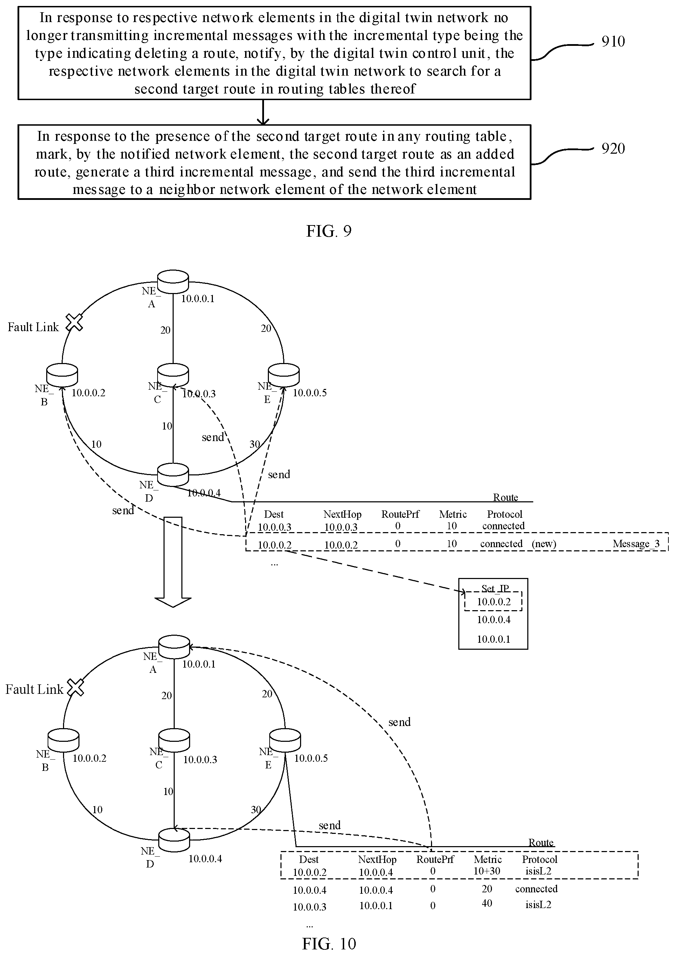

In some implementations, FIG. 9 is a flowchart of triggering to calculate a route in response to simulating a link with a fault according to an embodiment of the present application. The method further includes following operations 910 to 920.

At operation 910, in response to respective network elements in the digital twin network no longer transmitting incremental messages with the incremental type being the type indicating deleting a route, notifying, by the digital twin control unit, the respective network elements in the digital twin network to search for a second target route in routing tables thereof, a destination IP address of the second target route being included in a set of destination IP addresses of the digital twin network.

The digital twin control unit may determine that the respective network elements in the digital twin network no longer transmit incremental messages with the incremental type being the type indicating deleting a route in various manners, for example, by monitoring a situation of routing forwarding in the network in real time by the digital twin control unit, or in response to reporting by network elements, and the like, so as to timely determine that the incremental messages with the incremental type being the type indicating deleting a route are no longer transmitted in the network. If the digital twin control unit determines that the incremental messages with the incremental type being the type indicating deleting a route are no longer transmitted throughout the network, it indicates that the deletion of routes throughout the network caused by the fault of the link has been completed. However, in this case, there is a problem that routes with destination IP addresses thereof being the IP addresses of the network elements at two ends of the fault link are deleted from the routing tables of the network elements, and there is no path to reach the network elements at the two ends of the fault link, resulting in route information of the network being incomplete. In the embodiment of the present application, after the deletion of routes throughout the network is completed, the digital twin control unit notifies the respective network elements in the digital twin network to search for routes with destination IP addresses thereof being included in the set of destination IP addresses of the digital twin network from their routing tables, and transmits the found route information throughout the network, thereby restoring connections to the network elements at the two ends of the fault link.

At operation 920, in response to the presence of the second target route in any routing table, marking, by the notified network element, the second target route as an added route, generating a third incremental message, and sending the third incremental message to a neighbor network element of the network element, the third incremental message including information of the route marked as the added route, and the incremental type of the third incremental message being the type indicating adding a route.

In response to the second target route being present in the routing table of the notified network element, it indicates that the network element has a path to the network elements at the two ends of the fault link. Then, the second target route is marked as an added route and sent to other network elements in the network, thereby restoring connections of the other network elements reaching the network elements at the two ends of the fault link.

In some implementations, after receiving the third incremental message, the neighbor network element may perform following operations: determining, by the neighbor network element based on the received third incremental message, whether a route having the same destination IP address as a destination IP address in the third incremental message is present in its own routing table; in response to determining that a route having the same destination IP address as the destination IP address in the third incremental message is present in its own routing table, recalculating, based on the received third incremental message, a route to the destination IP address; comparing a metric value of the recalculated route to the destination IP address with a metric value of a route to the IP address stored in its own routing table, in response to the metric value of the recalculated route to the destination IP address being less than the metric value of the route to the destination IP address stored in its own routing table, replacing the metric value of the route in its own routing table with the metric value of the recalculated route to the destination IP address, generating a new incremental message, the new incremental message including information of the replaced route, and the incremental type of the new incremental message being the type indicating adding a route, and sending the new incremental message to a neighbor network element thereof; and in response to determining that a route having the same destination IP address as the destination IP address in the third incremental message is not present in its own routing table, determining whether a third destination IP address is present, the third destination IP address being present in the third incremental message but not in destination IP addresses in the routing table of the neighbor network element, in response to the presence of the third destination IP address, calculating, based on the received third incremental message, a route to the third destination IP address, and adding the route to the third destination IP address into its own routing table and generating a new incremental message, the new incremental message including information of the added route, and the incremental type of the new incremental message being the type indicating adding a route, and sending the new incremental message to a neighbor network element thereof.

It should be appreciated that the operations performed by the neighbor network element after receiving the third incremental message may also be implemented through operations 1135 to 1160 performed by a fourth network element described below.

To enable those skilled in the art to better understand the present application, the embodiment of the present application is further explained below by taking practical applications as examples.

FIG. 10 is a schematic diagram showing a process of triggering to calculate a route in response to simulating a link with a fault according to an embodiment of the present application. The network structure shown in FIG. 10 is substantially the same as that shown in FIG. 8, and will not be repeated here. It should be appreciated that the example shown in FIG. 10 includes operations subsequent to those in the example shown in FIG. 8.

A procedure executed by the digital twin control unit 150 includes following operations 31 to 34.

At operation 31, after the operations 11 to 16 described with reference to FIG. 8, determining, by the network element (taking the network element NE_D as an example) whether a second target route is present in its routing table, a destination IP address of the second target route being included in the set of destination IP addresses. In the example of FIG. 10, there is a route entry with the destination IP address 10.0.0.2 in the routing table of the network element NE_D, and the IP address 10.0.0.2 is included in the set of destination IP addresses, i.e., Set_IP.

At operation 32, marking the second target route as an added route, and encapsulating information of the added route into a third incremental message Message_3.

At operation 33, sending the third incremental message Message_3 to neighbor network elements (i.e., network elements NE_B, NE_C, NE_E). The third incremental message Message_3 includes information of the route marked as the added route, and the incremental type of the third incremental message Message_3 is the type indicating adding a route.

At operation 34, in response to the network element NE_E receiving the third incremental message Message_3 and finding that no route with the destination IP address 10.0.0.2 is in its own routing table, taking out the route with the destination IP address 10.0.0.2 and adding a link cost (i.e., the link metric value 30 between the network elements NE_D and NE_E) to calculate a new route metric value of 10+30, and adding the route to its own routing table; and then, spreading the information of the added route as a new incremental message to a neighbor network element thereof.

In the network element NE_E, the route with the destination address 10.0.0.2 that was previously deleted due to the fault link in the example shown in FIG. 8 is reestablished. Other network elements repeat the above operations until there is no further newly added route in the network.

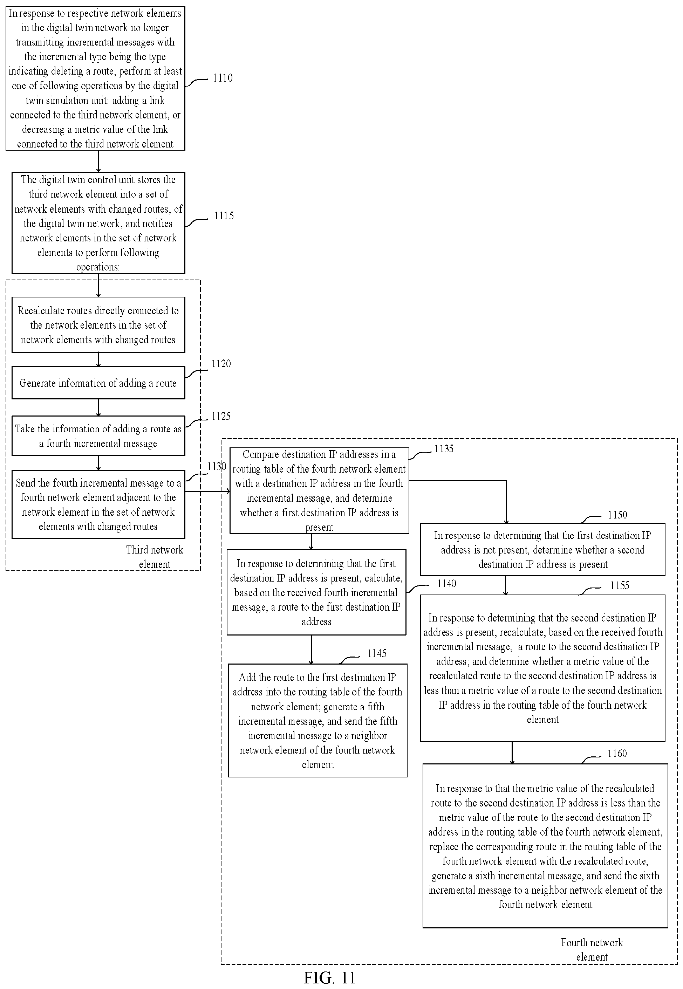

FIG. 11 is a flowchart of triggering to calculate a route in response to simulating a newly added link after simulating a link with a fault according to an embodiment of the present application. The method further includes following operations 1110 to 1160.

At operation 1110, in response to respective network elements in the digital twin network no longer transmitting incremental messages with the incremental type being the type indicating deleting a route, performing at least one of following operations by the digital twin simulation unit: adding a link connected to a third network element, or decreasing a metric value of the link connected to the third network element.

The digital twin control unit may determine that the respective network elements in the digital twin network no longer transmit incremental messages with the incremental type being the type indicating deleting a route in various manners, for example, by monitoring a situation of routing forwarding in the network in real time by the digital twin control unit, or in response to reporting by network elements, and the like, so as to timely determine that the incremental messages with the incremental type being the type indicating deleting a route are no longer transmitted in the network. Then, the digital twin simulation unit adds a link connected to the third network element. It should be noted that the third network element here may include the network elements at two ends of the fault link, or may include other network elements. In some implementations, the network elements at two ends of the added link may be stored into a set of network elements.

At operation 1115, storing, by the digital twin control unit, the third network element into a set of network elements, with changed routes, of the digital twin network, and notifying the network elements in the set of network elements with the changed routes to perform following operations: recalculating routes directly connected to the network elements in the set of network elements with the changed routes.

In operation 1120, generating information of adding a route, the information of adding a route including information of the recalculated routes and information of routes stored in routing tables of the network elements in the set of network elements with the changed routes.

At operation 1125, taking the information of adding a route as a fourth incremental message, the incremental type of the fourth incremental message being the type indicating adding a route.

At operation 1130, sending the fourth incremental message to a fourth network element adjacent to the network elements in the set of network elements with the changed routes.

At operation 1135, the fourth network element receiving the fourth incremental message and performing following operations: comparing destination IP addresses in a routing table of the fourth network element with a destination IP address in the fourth incremental message, and determining whether a first destination IP address is present, the first destination IP address being present in the fourth incremental message but not in the destination IP addresses in the routing table of the fourth network element.

At operation 1140, in response to determining that the first destination IP address is present, calculating, based on the received fourth incremental message, a route to the first destination IP address.

At operation 1145, adding the route to the first destination IP address into the routing table of the fourth network element; generating a fifth incremental message, and sending the fifth incremental message to a neighbor network element of the fourth network element, the fifth incremental message including information of the added route, and the incremental type of the fifth incremental message being the type indicating adding a route.

At operation 1150, in response to determining that no first destination IP address is present, determining whether a second destination IP address is present, the second destination IP address being present in the fourth incremental message and in the destination IP addresses in the routing table of the fourth network element.

At operation 1155, in response to determining that the second destination IP address is present, recalculating, based on the received fourth incremental message, a route to the second destination IP address; and determining whether a metric value of the recalculated route to the second destination IP address is less than a metric value of a route to the second destination IP address in the routing table of the fourth network element.

At operation 1160, in response to the metric value of the recalculated route to the second destination IP address being less than the metric value of the route to the second destination IP address in the routing table of the fourth network element, replacing the corresponding route in the routing table of the fourth network element with the recalculated route, generating a sixth incremental message, and sending the sixth incremental message to a neighbor network element of the fourth network element, the sixth incremental message including information of the replaced route, and the incremental type of the sixth incremental message being the type indicating adding a route.

To enable those skilled in the art to better understand the present application, the embodiment of the present application is further explained below by taking practical applications as examples.

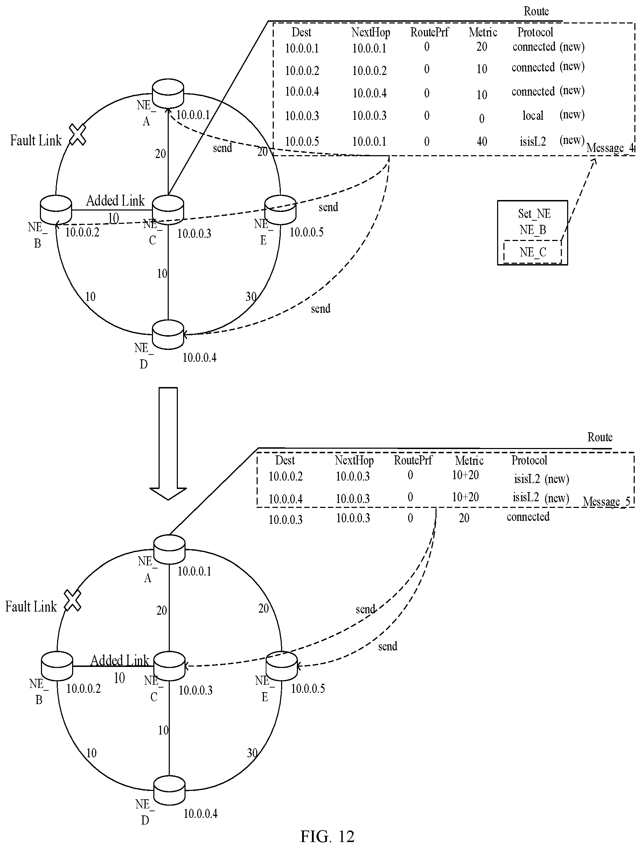

As another example, FIG. 12 is a schematic diagram showing a process of triggering to calculate a route in response to simulating a newly added link after simulating a link with a fault according to an embodiment of the present application. The network structure shown in FIG. 12 is substantially the same as that shown in FIG. 8, and will not be repeated here.

A fault is set in the digital twin data model 130 by the digital twin simulation unit 140, for example, a link between the network elements NE_A and NE_B is set as a fault link, and a link between the network elements NE_C and NE_B is newly added.

A procedure executed by the digital twin control unit 150 includes following operations 41 to 43.

At operation 41, first, performing the process of generating information of deleting a route due to a link with a fault, which is the same as operations 11 to 16 described above with reference to FIG. 8, and subsequently, due to the added link between the network elements NE_C and NE_B, the network elements NE_C and NE_B at two ends of the added link being placed into a set of network elements, i.e., Set_NE.

At operation 42, since the network elements NE_C and NE_B are in the set of network elements, i.e., Set_NE, generating, by the network elements NE_C and NE_B, a fourth incremental message Message_4 based on the change in the link. In this example, the network element (taking the network element NE_C as an example) recalculates a route directly connected to the network element NE_C, marks the recalculated route and routes stored in a routing table of the network element NE_C as added routes, and encapsulates information of the added routes into a fourth incremental message Message_4. The fourth incremental message Message_4 is sent to neighbor network elements of the network element NE_C, i.e., network elements NE_A, NE_B and NE_D.

At operation 43, taking the network element NE_A as an example, in response to the network element NE_A finding that there is no route with destination IP addresses 10.0.0.2 and 10.0.0.4 in its own routing table due to an operation of deleting a route, taking out routes with the destination IP addresses 10.0.0.2 and 10.0.0.4 from the received fourth incremental message, and adding a link cost (i.e., the link metric value 20 between the network elements NE_C and NE_A) to calculate a new route metric value, and adding the corresponding route to its own routing table; and then, spreading the information of the added route as a new incremental message (i.e., a fifth incremental message Message_5) to a neighbor network element thereof.

Due to the appearance of the added link, the network element NE_A finds a route to the network element NE_B. Other network elements repeat the above operations until there is no further newly added route in the network.

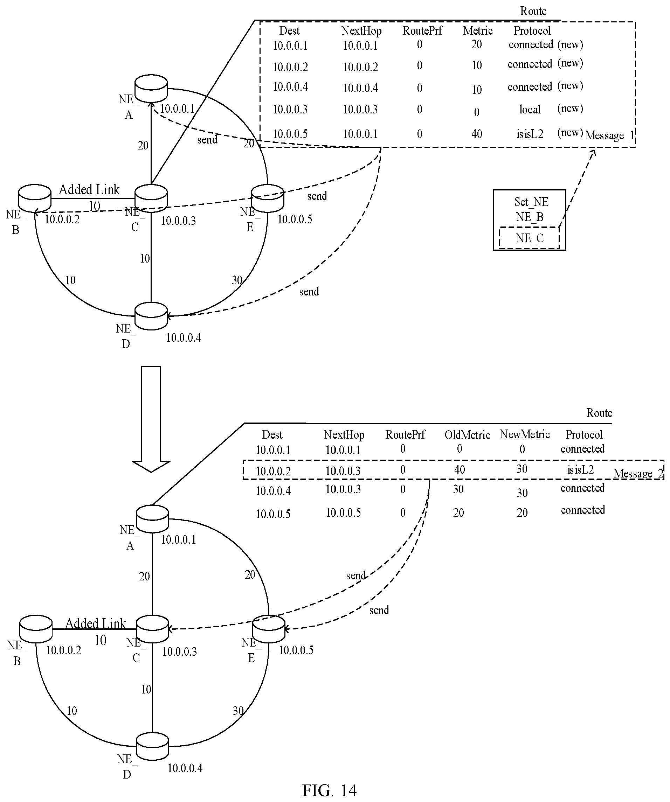

It should be appreciated that after the above operations 41 to 43, operations 21 to 25 described below with reference to FIG. 14 may be further performed to re-establish connections between network elements not related to the added link, or to obtain optimized routes between the respective network elements.

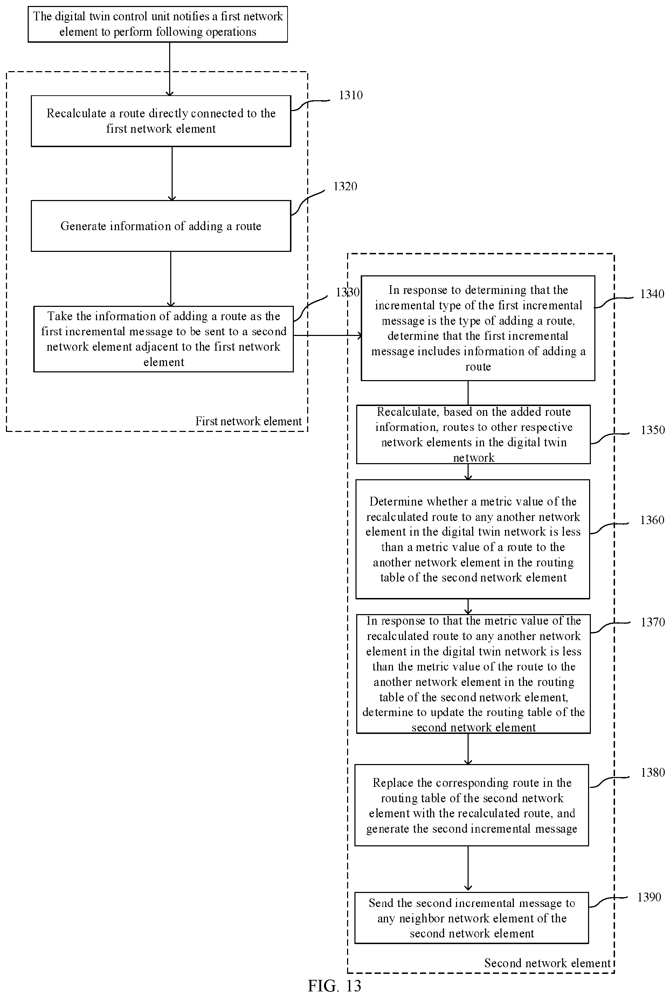

In some implementations, simulating, by the digital twin simulation unit, the change in the link in the digital twin network (operation 510) includes at least one of: adding a link connected to the first network element, or decreasing a metric value of the link connected to the first network element. FIG. 13 is a flowchart of triggering to calculate a route in response to simulating a newly added link according to an embodiment of the present application. The method further includes following operations 1310 to 1390.

At operation 1310, recalculating a route directly connected to the first network element.

At operation 1320, generating information of adding a route, the information of adding a route including information of the recalculated route and information of routes stored in a routing table of the first network element.

At operation 1330, taking the information of adding a route as the first incremental message, the incremental type of the first incremental message being the type indicating adding a route, and sending the first incremental message to a second network element adjacent to the first network element.

At operation 1340, in response to determining that the incremental type of the first incremental message is the type indicating adding a route, determining that the first incremental message includes information of adding a route.

At operation 1350, recalculating, based on the information of adding a route, routes to other respective network elements in the digital twin network.

At operation 1360, determining whether a metric value of the recalculated route to any another network element in the digital twin network is less than a metric value of a route to the another network element in the routing table of the second network element.

At operation 1370, in response to the metric value of the recalculated route to any another network element in the digital twin network being less than the metric value of the route to the another network element in the routing table of the second network element, determining to update the routing table of the second network element.

At operation 1380, replacing the corresponding route in the routing table of the second network element with the recalculated route, and generating the second incremental message, with the second incremental message including information of the replaced route, and the incremental type of the second incremental message being the type indicating adding a route.

At operation 1390, sending the second incremental message to any neighbor network element of the second network element.

To enable those skilled in the art to better understand the present application, the embodiment of the present application is further explained below by taking practical applications as examples.

FIG. 14 is a schematic diagram showing a process of triggering to calculate a route in response to simulating a link being newly added according to an embodiment of the present application. In the example shown in FIG. 14, the digital twin network includes five network elements NE_A to NE_E, with IP addresses 10.0.0.1 to 10.0.0.5, respectively. Links are respectively connected between the network element NE_A and the network elements NE_C and NE_E, and metric values of these two links are 20 and 20, respectively. Links are respectively connected between the network element NE_D and the network elements NE_B, NE_C and NE_E, and metric values of these three links are 10, 10 and 30, respectively.

At operation 21, simulating a change in a link.

A link between the network elements NE_C and NE_B may be added in the digital twin data model 130 by the digital twin simulation unit 140. The network elements NE_C and NE_B at two ends of the added link are placed into a set of network elements, i.e., Set_NE.

A procedure executed by the digital twin control unit 150 includes following operations 22 to 25.

At operation 22, since the network elements NE_C and NE_B are in the set of network elements, i.e., Set_NE, generating, by the network elements NE_C and NE_B, an incremental message, i.e., a first incremental message Message_1, based on the change in the link. In this example, the network element (i.e., the first network element, taking the network element NE_C as an example) recalculates a route directly connected to the network element NE_C, marks the recalculated route and routes stored in a routing table of the network element NE_C as added routes, and encapsulates information of the added routes into the first incremental message Message_1.

At operation 23, sending the first incremental message Message_1 to neighbor network elements (i.e., the network elements NE_A, NE_B and NE_D) of the network element NE_C.

At operation 24, taking the network element NE_A as an example, after receiving the first incremental message Message_1, determining, based on the information relating to an incremental type carried in the first incremental message Message_1, that the type of the first incremental message Message_1 is the type indicating adding a route; recalculating, by the network element NE_A based on the information of adding a route, routes to other respective network elements in the digital twin network; determining whether a metric value of the recalculated route to any another network element in the digital twin network is less than the metric value of a route to the another network element in the routing table of the network element NE_A; and in response to that the metric value of the recalculated route to any another network element in the digital twin network is less than the metric value of the route to the another network element in the routing table, replacing the corresponding route in the routing table with the recalculated route.

At operation 25, encapsulating information of the replaced route into a new incremental message (i.e., a second incremental message Message_2), the information in the second incremental message Message_2 being different from the information in the first incremental message Message_1, and the incremental type of the second incremental message Message_2 being the type indicating adding a route, and spreading, by the network element NE_A, the second incremental message Message_2 to neighbor network elements thereof (i.e., the network elements NE_C and NE_E).

If the network elements NE_C and NE_E determine, based on the second incremental message Message_2, to update their routing tables, the above operations 24 and 25 are performed, until no incremental message is further spread and optimization and adjustment on routes throughout the network have been performed.

Although the embodiments of the present application have described in detail the simulation of changes in link states, it should be appreciated that the present application can also enable to perform simulations for operations such as adding a network element, deleting a network element, adding an interface, deleting an interface, or changing a protocol configuration, which will not be elaborated here.

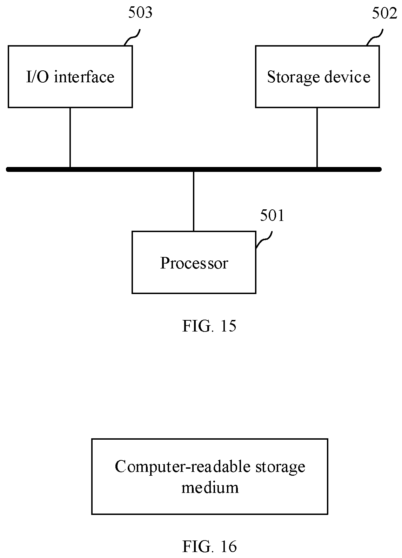

Referring to FIG. 15, an embodiment of the present application provides an electronic device, including: at least one processor 501; and a storage device 502 having stored thereon at least one computer program or instruction which, when executed by the at least one processor, cause the at least one processor to implement the link simulation method based on the digital twin network according to any embodiment of the present application.

In addition, the electronic device may further include at least one I/O interface 503 connected between the processor and the storage device and configured to enable information interaction between the processor and the storage device.

The processor 501 is a device with a data processing capability, including but not limited to a central processing unit (CPU), or the like. The storage device 502 is a device with a data storage capacity, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 503 is connected between the processor 501 and the memory 502 to enable information interaction between the processor 501 and the storage device 502, and includes, but is not limited to, a data bus or the like.

In some implementations, the processor 501, the storage device 502, and the I/O interface 503 are interconnected via a bus, so as to be further connected to other components of a computing device.

In some implementations, a procedure executed by a link simulation system based on a digital twin network includes following operations 10 to 80.

At operation 10, collecting route data information by a data collector 110 from a physical network, and collecting resource information by a network state collector 120 from the physical network.

At operation 20, constructing a digital twin data model 130 by using the route data information and the resource information.

At operation 30, changing a network state in the digital twin data model 130 by a digital twin simulation unit 140.

At operation 40, notifying, by the digital twin simulation unit 140, a digital twin control unit 150 that a network state of the digital twin data model 130 is changed.

At operation 50, obtaining the latest information of the network state by the digital twin control unit 150.

At operation 60, simulating, by the digital twin control unit 150, a change of a route in the digital twin network and updating the digital twin data model 130.

At operation 70, replying, by the digital twin control unit 150, to the digital twin simulation unit 140 that routes of the digital twin network are updated.

At operation 80, obtaining, by the digital twin simulation unit 140, a simulation result from the digital twin data model 130.

Referring to FIG. 16, an embodiment of the present application provides a non-volatile computer-readable medium having stored thereon at least one computer program or instruction which, when executed by a processor, cause the processor to implement the link simulation method based on the digital twin network according to any embodiment of the present application.

Those of ordinary skill in the art will appreciate that all or some operations of the above described method, function modules/units in the system and apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, a RAM, a ROM, an EEPROM, a flash or any other memory technology, a CD-ROM, a digital versatile disc (DVD) or any other optical disc storage, a magnetic cartridge, a magnetic tape, a magnetic disc storage or any other magnetic storage device, or may be any other medium used for storing the desired information and accessible by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

By means of a centralized computation, the digital twin network of the present application synchronizes complete topology information of all network elements in the physical network, constructs a model of a control plane of the network, and simulates how a route changes in the digital twin network in response to a change in any network element, interface, link, and/or protocol configuration. Since the digital twin network synchronizes topology information of all network elements in the physical network, i.e., establishes a virtual network with complete route data, by dynamically simulating a network state of the digital twin network, for example, by simulating a link with a fault or a link being newly added, a synchronization of a route can be simply implemented by the network element in the network forwarding incremental route information with the change, without constructing a routing table from scratch, thereby greatly reducing computational data volume and improving the accuracy and efficiency of calculating.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made without departing from the scope of the present application as set forth in the appended claims.

## Claims

1. A link simulation method based on a digital twin network, applied to a first network element, comprising:
in response to a change in a link connected to the first network element, generating a first incremental message based on the change in the link; and
sending the first incremental message to a neighbor network element of the first network element.

2. The link simulation method according to claim 1, wherein the change in the link comprises changing a metric value of the link connected to the first network element to simulate a fault of the link, and
generating the first incremental message based on the change in the link comprises:
deleting a route in a routing table of the first network element, with a next-hop IP address of the route being a peer network element in the link with the fault;
generating information of deleting a route, with the information of deleting a route comprising information of the deleted route; and
taking the information of deleting a route as the first incremental message.

3. The link simulation method according to claim 2, wherein generating the first incremental message based on the change in the link further comprises:
storing a destination IP address of the deleted route to a set of destination IP addresses of the digital twin network.

4. The link simulation method according to claim 2, wherein changing the metric value of the link connected to the first network element to simulate the fault of the link comprises at least one of: increasing the metric value of the link, or deleting the link.

5. The link simulation method according to claim 1, wherein the change in the link comprises at least one of: adding a link connected to the first network element, or decreasing a metric value of the link connected to the first network element, and
generating the first incremental message based on the change in the link comprises:
recalculating a route directly connected to the first network element;
generating information of adding a route, with the information of adding a route comprises information of the recalculated route and information of routes stored in a routing table of the first network element; and
taking the information of adding a route as the first incremental message.

6. The link simulation method according to claim 2 or 5, wherein the first incremental message further comprises information relating to an incremental type, and the incremental type comprises one of a type indicating deleting a routing or a type indicating adding a routing.

7. A link simulation method based on a digital twin network, applied to a second network element, comprising:
receiving an incremental message sent from a neighbor network element of the second network element, with the incremental message comprises information of deleting a route or information of adding a route;
determining, based on the received incremental message, whether to update a routing table of the second network element;
in response to determining to update the routing table of the second network element, updating the routing table of the second network element based on the incremental message and generating a second incremental message, and sending the second incremental message to any neighbor network element of the second network element.

8. The link simulation method according to claim 7, wherein the incremental message comprises information relating to an incremental type, and the incremental type comprises one of a type indicating deleting a route or a type indicating adding a route, and
in response to determining that the incremental type is the type indicating deleting a route, determining that the incremental message comprises information of deleting a route.

9. The link simulation method according to claim 8, wherein in response to determining that the incremental type is the type indicating deleting a route, determining, based on the received incremental message, whether to update the routing table of the second network element comprises:
determining whether at least one first target route is present in the routing table of the second network element, with a destination IP address of the at least one first target route being the same as a destination IP address of a deleted route contained in the incremental message, and a next-hop IP address of the at least one first target route being an IP address of a network element sending the incremental message; and
in response to a presence of the at least one first target route, determining to update the routing table of the second network element.

10. The link simulation method according to claim 9, wherein in response to determining to update the routing table of the second network element, updating the routing table of the second network element based on the incremental message and generating the second incremental message comprises:
deleting the at least one first target route from the routing table of the second network element, with the at least one first target route comprising one or more first target routes; and
taking information of the deleted first target route as the second incremental message, with the incremental type of the second incremental message being the type indicating deleting a route.

11. The link simulation method according to claim 7, wherein the incremental message comprises information relating to an incremental type, and the incremental type comprises one of a type indicating deleting a route or a type indicating adding a route, and the method further comprises:
in response to determining that the incremental type is the type indicating adding a route, determining that the incremental message comprises information of adding a route.

12. The link simulation method according to claim 11, wherein in response to that the incremental type is the type indicating adding a route, determining, based on the received incremental message, whether to update the routing table of the second network element comprises:
recalculating, based on the information of adding a route, routes from the second network element to other respective network elements in the digital twin network;
determining whether a metric value of the recalculated route from the second network element to any another network element in the digital twin network is less than a metric value of a route to the another network element in the routing table of the second network element; and
in response to that the metric value of the recalculated route from the second network element to the another network element in the digital twin network is less than the metric value of the route to the another network element in the routing table of the second network element, determining to update the routing table of the second network element.

13. The link simulation method according to claim 12, wherein in response to determining to update the routing table of the second network element, updating the routing table of the second network element based on the incremental message and generating the second incremental message comprises:
replacing the route in the routing table of the second network element with the recalculated route, and generating the second incremental message, with the second incremental message comprising information of the replaced route, and the incremental type of the second incremental message being the type indicating adding a route.

14. A link simulation method based on a digital twin network, the digital twin network comprising a digital twin simulation unit and a digital twin control unit, the method comprising:
simulating, by the digital twin simulation unit, a change in a link in the digital twin network; and
in response to the change in the link, updating, by the digital twin control unit, routes of respective network elements in the digital twin network.

15. The link simulation method according to claim 14, wherein updating, by the digital twin control unit, routes of respective network elements in the digital twin network comprises notifying, by the digital twin control unit, a first network element to perform following operations, with the first network element comprising network elements at two ends of the link with the change in the digital twin network:
generating a first incremental message based on the change in the link, with the first incremental message comprising information of deleting a route or information of adding a route, the first incremental message further comprising information relating to an incremental type, and the incremental type comprising one of a type indicating deleting a route or a type indicating adding a route;
sending the first incremental message to a second network element adjacent to the first network element,
receiving the first incremental message by the second network element and performing following operations:
determining, based on the received first incremental message, whether to update a routing table of the second network element;
in response to determining to update the routing table of the second network element, updating the routing table of the second network element based on the first incremental message and generating a second incremental message, and sending the second incremental message to any neighbor network element of the second network element.

16. The link simulation method according to claim 15, wherein simulating, by the digital twin simulation unit, the change in the link in the digital twin network comprises: changing a metric value of the link connected to the first network element to simulate a fault of the link, and
generating the first incremental message based on the change in the link comprises:
deleting a route in a routing table of the first network element with a next-hop IP address of the route being a peer network element in the link with the fault;
generating information of deleting a route, with the information of deleting a route comprising information of the deleted route;
taking the information of deleting a route as the first incremental message, with the incremental type of the first incremental message being the type indicating deleting a route, and storing a destination IP address of the deleted route to a set of destination IP addresses of the digital twin network,
determining, based on the received first incremental message, whether to update the routing table of the second network element comprises:
in response to determining that the incremental type of the first incremental message is the type indicating deleting a route, determining that the first incremental message comprises information of deleting a route;
determining whether at least one first target route is present in the routing table of the second network element, with a destination IP address of the at least one first target route being contained in a set of destination IP addresses of the digital twin network, and a next-hop IP address of the at least one first target route being an IP address of the first network element;
in response to a presence of the at least one first target route, determining to update the routing table of the second network element, and
in response to determining to update the routing table of the second network element, updating the routing table of the second network element based on the first incremental message and generating the second incremental message comprises:
deleting the at least one first target route from the routing table of the second network element, with the at least one first target route comprising one or more first target routes; and
taking information of deleting the first target route as the second incremental message, with the incremental type of the second incremental message being the type indicating deleting a route.

17. The link simulation method according to claim 16, wherein changing the metric value of the link connected to the first network element to simulate the fault of the link comprises at least one of: increasing the metric value of the link, or deleting the link.

18. The link simulation method according to claim 16, further comprising:
in response to respective network elements in the digital twin network no longer transmitting incremental messages with the incremental type being the type indicating deleting a route, notifying, by the digital twin control unit, the respective network elements in the digital twin network to search for a second target route in the routing tables thereof, with a destination IP address of the second target route being contained in a set of destination IP addresses of the digital twin network; and
in response to a presence of the second target route in any routing table, marking, by the notified network element, the second target route as an added route, generating a third incremental message, and sending the third incremental message to a neighbor network element of the network element, with the third incremental message comprising information of the route marked as the added route, and the incremental type of the third incremental message being the type indicating adding a route.

19. The link simulation method according to claim 16, further comprising:
in response to respective network elements in the digital twin network no longer transmitting incremental messages with the incremental type being the type indicating deleting a route, performing at least one of following operations by the digital twin simulation unit: adding a link connected to a third network element, or decreasing a metric value of the link connected to the third network element; and
storing, by the digital twin control unit, the third network element into a set of network elements with changed routes of the digital twin network, and notifying the network elements in the set of network elements with the changed routes to perform following operations:
recalculating routes directly connected to the network elements in the set of network elements with changed routes;
generating information of adding a route, with the information of adding a route comprising information of the recalculated routes and information of routes stored in routing tables of the network elements in the set of network elements with changed routes;
taking the information of adding a route as a fourth incremental message, with the incremental type of the fourth incremental message being the type indicating adding a route;
sending the fourth incremental message to a fourth network element adjacent to the network element in the set of network elements with changed routes;
receiving the fourth incremental message by the fourth network element and performing following operations:
comparing destination IP addresses in a routing table of the fourth network element with a destination IP address in the fourth incremental message, and determining whether at least one first destination IP address is present, with the at least one first destination IP address being present in the fourth incremental message but not in the destination IP addresses in the routing table of the fourth network element;
in response to determining that the at least one first destination IP address is present, calculating, based on the received fourth incremental message, a metric value of a route to the first destination IP address; adding the route to the first destination IP address into the routing table of the fourth network element; generating a fifth incremental message, and sending the fifth incremental message to a neighbor network element of the fourth network element, with the fifth incremental message comprising information of the added route, and the incremental type of the fifth incremental message being the type indicating adding a route; and
in response to determining that the at least one first destination IP address is not present, determining whether a second destination IP address is present, with the second destination IP address being present in the fourth incremental message and in the destination IP addresses in the routing table of the fourth network element; in response to determining that the second destination IP address is present, recalculating, based on the received fourth incremental message, a route to the second destination IP address;
determining whether a metric value of the recalculated route to the second destination IP address is less than a metric value of a route to the second destination IP address in the routing table of the fourth network element; and
in response to that the metric value of the recalculated route to the second destination IP address is less than the metric value of the route to the second destination IP address in the routing table of the fourth network element, replacing the route in the routing table of the fourth network element with the recalculated route, generating a sixth incremental message, and sending the sixth incremental message to a neighbor network element of the fourth network element, with the sixth incremental message comprising information of the replaced route, and the incremental type of the sixth incremental message being the type indicating adding a route.

20. The link simulation method according to claim 15, wherein simulating, by the digital twin simulation unit, the change in the link in the digital twin network comprises at least one of: adding a link connected to the first network element, or decreasing a metric value of the link connected to the first network element, and
generating the first incremental message based on the change in the link comprises:
recalculating a route directly connected to the first network element;
generating information of adding a route, with the information of adding a route comprising information of the recalculated route and information of routes stored in a routing table of the first network element; and
taking the information of adding a route as the first incremental message, with the incremental type of the first incremental message being the type indicating adding a route,
determining, based on the received first incremental message, whether to update the routing table of the second network element comprises:
in response to determining that the incremental type of the first incremental message is the type indicating adding a route, determining that the first incremental message comprises information of adding a route;
recalculating, based on the information of adding a route, routes from the second network element to other respective network elements in the digital twin network;
determining whether a metric value of the recalculated route from the second network element to any another network element in the digital twin network is less than a metric value of a route to the another network element in the routing table of the second network element; and
in response to that the metric value of the recalculated route from the second network element to any another network element in the digital twin network is less than the metric value of the route to the another network element in the routing table of the second network element, determining to update the routing table of the second network element, and
in response to determining to update the routing table of the second network element, updating the routing table of the second network element based on the first incremental message and generating the second incremental message comprises:
replacing the route in the routing table of the second network element with the recalculated route, and generating the second incremental message, with the second incremental message comprising information of the replaced route, and the incremental type of the second incremental message being the type indicating adding a route.

21. An electronic device, comprising:
at least one processor; and
a storage device having stored at least one computer program or instruction, at least one processor executes the at least one computer program or instruction to implement the link simulation method according to any one of claims 1 to 20.

22. A non-volatile computer-readable storage medium having stored thereon a computer program or instruction which, when executed by a processor, causes the processor to implement the link simulation method according to any one of claims 1 to 20.
